# EUROPEAN PATENT SPECIFICATION

(11) **EP 3 699 463 B1**
(45) Date of publication and mention of the grant of the patent: **22.09.2021**
(21) Application number: 20157595.8
(22) Date of filing: 17.02.2020
(51) Int. Cl.: F16K 5/06, F16J 15/12, F16K 5/20

(54) **BALL VALVE**
KUGELVENTIL
SOUPAPE À BILLE

(30) Priority: 21.02.2019 IT 201900002509
(43) Date of publication of application: 26.08.2020
(73) Proprietor: Colombo, Renato, 25015 Desenzano del Garda (BS) (IT)
(72) Inventor: Colombo, Renato, 25015 Desenzano del Garda (BS) (IT)
(74) Representative: Modiano, Micaela Nadia

(56) References cited:
- GB-A- 1 515 363
- US-A- 2 297 161
- US-A- 2 373 628
- US-A- 3 486 733
- US-A- 3 610 575
- US-A- 5 746 417
- US-A1- 2011 233 438
- US-A1- 2015 102 251

## Description

The present invention relates to a ball valve.

Ball valves comprising a valve body which accommodates a respective hollow ball-type flow control element are known and widely used.

The ball-type element has at least one flow passage and is able to move rotationally between at least one flow intake position and a flow control position.

The ball-type element is associated with a stem, which is integral or is adapted to be rendered integral with the ball-type element.

The stem can be actuated in order to allow the rotation of the ball-type element through a preset angle from the intake position to the flow control position and vise versa.

Typically, sealing gaskets are arranged between the valve element and the ball-type element.

If a high maneuverability of the ball-type element is required, sealing gaskets made of elastomer, which are very elastic, are usually used.

While on the one hand this elasticity ensures high operation capabilities of the ball-type element, on the other hand, in the presence of medium and high pressures of the fluid turbulences which tends to unseat the gasket from the respective seat occur in the valve body.

This problem is more conspicuous in the region where the ball closes during the operation step, since reducing the passage opening increases the speed of the fluid.

In order to try to eliminate this drawback, sealing gaskets have been proposed which are constituted by a main body made of plastic material or elastomer, with which a metallic insert is associated which is co-molded and arranged at the internal surface of the gasket.

A so-called primer is used to improve the mutual adhesion between the main body and the metallic insert.

This constructive solution allows to make the gasket stiffer but it still has drawbacks.

First of all, it has been observed that as a consequence of the prolonged contact with the fluid at high temperatures the primer loses its effectiveness.

Furthermore, the primers normally used do not have specific certifications for their use in applications in which they can come into contact with potable water.

Moreover, it has been observed that the use of primer renders the main body of the gasket more rigid.

Finally, at the production level, the management of the primer and its application significantly increase costs.

GB 1 515 363 A discloses a ball valve according to the preamble of claim 1.

The aim of the present invention is to solve the problems and obviate the drawbacks described above, providing a ball valve having sealing means that are extremely reliable without the need to use primer.

Within this aim, an object of the invention is to provide a ball valve in which the sealing means are structurally simple and in which the elastic properties are high and constant.

Another object of the invention is to provide sealing means for ball valves capable of ensuring high operation capability of the ball-type element, but in which there is no risk, not even in the presence of medium and high pressures of the fluid, of an unseating of the gasket from the respective seat and even of the main body with respect to the metallic insert.

Another object of the invention is to propose a ball valve that allows extremely practical maintenance and has a competitive production cost, so as to render its use advantageous also from the economic standpoint.

This aim, as well as these and other objects which will become better apparent hereinafter, are achieved by a ball valve according to claim 1.

Further characteristics and advantages of the invention will become better apparent from the description of some preferred but not exclusive embodiments of a ball valve according to the invention, illustrated by way of non-limiting example in the accompanying drawings, wherein:

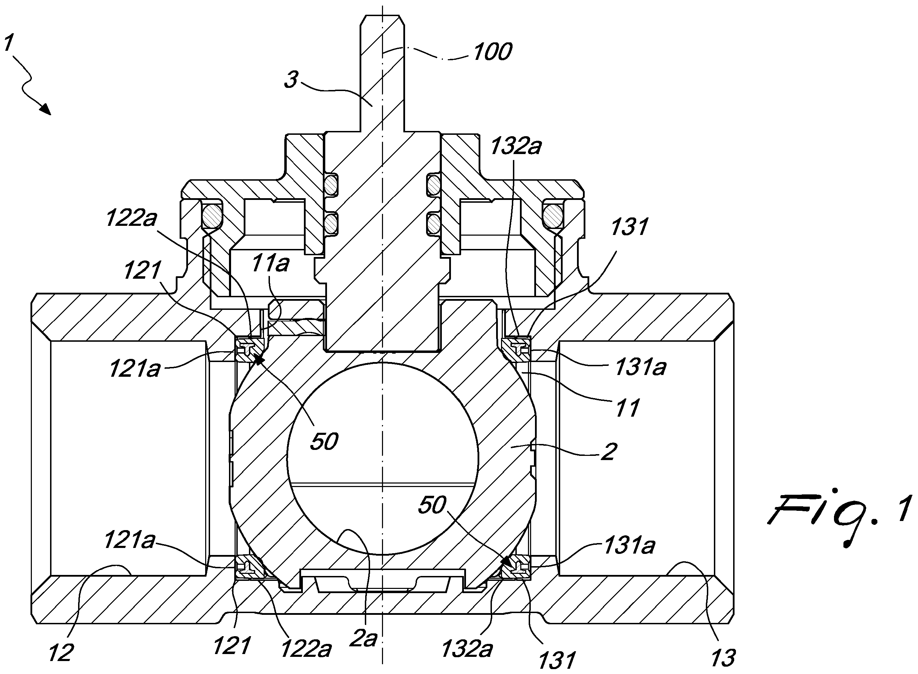

Figure 1 is a sectional view of a ball valve according to the invention;

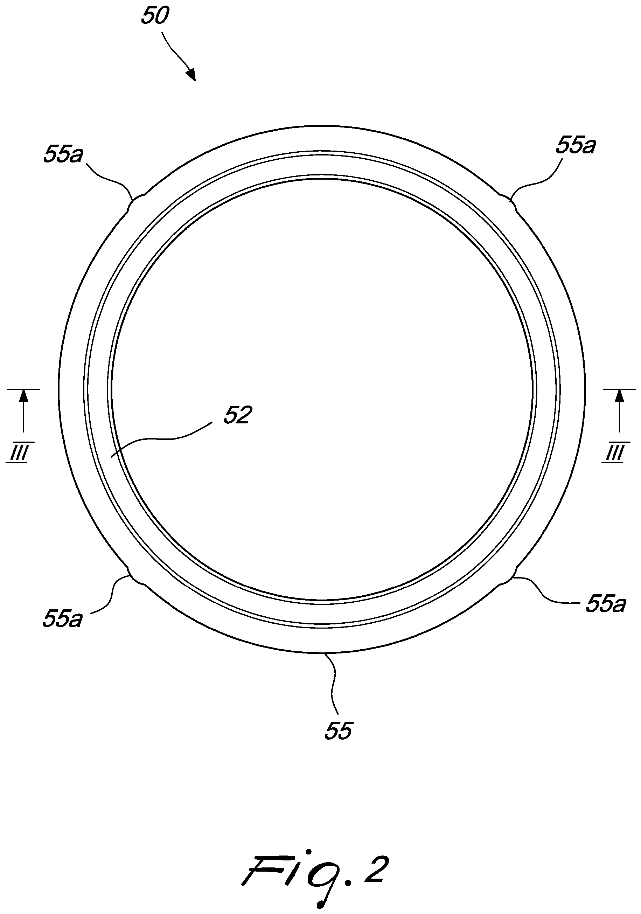

Figure 2 is a top view of the sealing means;

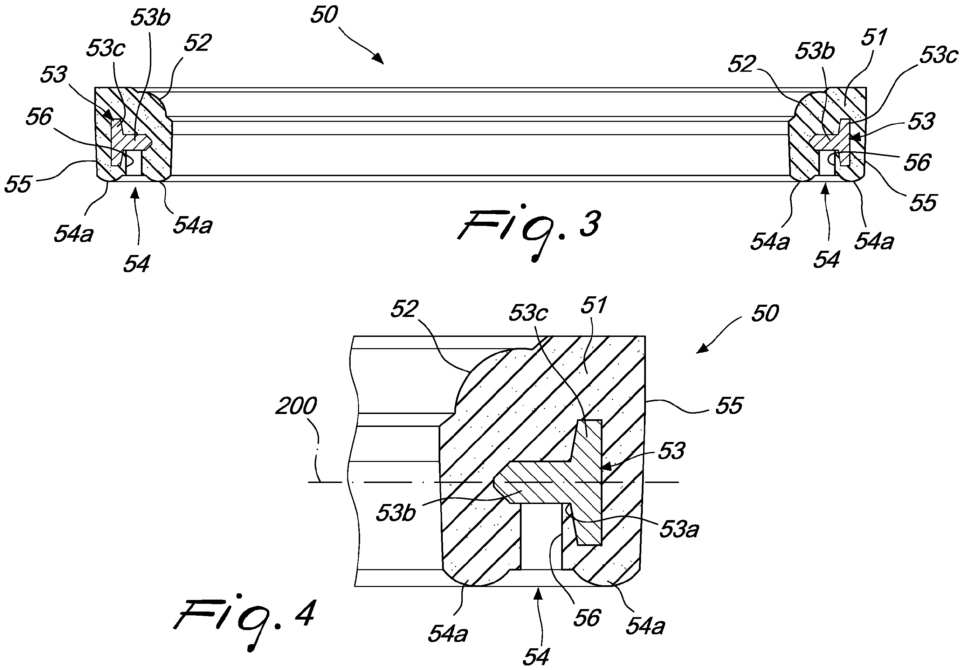

Figure 3 is a diametrical sectional view of the sealing means, along the plane of arrangement defined by the line III-III of Figure 2;
Figure 4 is an enlarged-scale view of a portion of the cross-section of Figure 3;
Figure 5 is a partially sectional perspective view of a constructive variation of the sealing means 50;
Figure 6 is an elevation view of the annular stiffening body of the sealing means of Figure 5;
Figure 7 is a side view of the annular stiffening body of Figure 6;
Figure 8 is a sectional view of the annular stiffening body according to a plane defined by the line VIII-VIII of Figure 7;
Figure 9 is a sectional view of the annular stiffening body, taken along a plane defined by the line IX-IX of Figure 7.

In the exemplary embodiments that follow, individual characteristics, given in relation to specific examples, may actually be interchanged with other different characteristics that exist in other exemplary embodiments.

With reference to the figures, the present invention relates to a ball valve, generally designated by the reference numeral 1, for controlling the flow of fluids in ducts.

The valve 1 comprises a hollow valve body 11 which has at least one open tubular intake portion 12 and at least one open tubular delivery portion 13 for connection to a respective duct portion, and a hollow ball-type flow control element 2, which is accommodated in the hollow valve body 11.

The hollow valve body 11 is provided in an upper region with an access inlet 11a.

In particular, the fluid is sent to the valve body 11 through the open tubular intake portion 12.

The ball-type element 2 has at least one flow passage 2a and is able to move rotationally between at least one flow intake position and a flow control position.

When the ball-type element 2 is moved into the flow intake position, the fluid that arrives from the open tubular intake portion 12 is sent toward the open tubular delivery portion 13.

The valve 1 is furthermore provided with a stem 3 which is integral or adapted to be rendered integral with the ball-type element 2 and can be actuated, for example by means of an actuation body, to allow the rotation of the ball-type element 2 through a preset angle from the intake position to the flow control position and vice versa.

Furthermore, the valve 1 has sealing means 50 arranged between each of the two open tubular portions 12, 13 and the ball-type element 2.

Specifically, the sealing means 50 are accommodated at a respective gasket seat 121, 131.

Each gasket seat 121, 131 is provided with a shoulder 121a, 131a and a longitudinal seat portion 122a, 132a.

According to the invention, the sealing means 50 comprise respectively a substantially cylindrical base body 51 made of polymeric material and/or silicone material, which is co-molded around at least one annular stiffening body 53.

In particular, the annular stiffening body 53 forms at least one angular positioning segment 53a.

According to a first aspect of the present invention, the primer is not interposed between the annular stiffening body 53 and the base body 51.

The base body 51 is provided with an internal annular surface 52 designed to face a portion of the outer surface of the ball-type element 2 and a sealing surface 54, which is arranged opposite with respect to the internal annular surface 52 and is designed to face a respective annular shoulder 121a, 131a of a respective gasket seat 121, 131.

Each longitudinal seat portion 122a, 132a is arranged substantially at right angles to the respective angular shoulder 121a, 131a and is designed to face the outer surface 55 of the sealing means 50.

At least one restrained flow passage for the fluid is provided between the outer surface 55 of the sealing means 50 and the respective longitudinal seat portion 122a, 132a and is adapted to allow, with the ball-type element 2 in the flow control position, the passage of fluid from the open tubular intake portion 12 toward the hollow valve body 11.

Accordingly, when the ball-type element 2 is moved to the flow control condition, the passage of fluid from the open tubular intake portion 12 toward the hollow valve body 11 through the passage or passages is observed.

The external sealing surface 54 is deformable when the ball-type element 2 is in the flow control position.

In this manner, the compression of the external sealing surface 54 ensures in any case the seal of the sealing means 50.

Furthermore, if one is in such a condition that it is possible to detect a difference in pressure between the open tubular intake portion and the hollow valve body 11, a condition which typically occurs when the ball-type element is in the flow control condition, a further compression of the sealing means 50 arranged between the hollow valve body and the open tubular delivery portion 13 occurs.

The passage of the fluid from the open tubular intake portion 12 into the hollow valve body 11 substantially eliminates any force acting on the sealing means 50, a force which would tend to unseat the annular stiffening body 53 from the base body 51.

For this reason, the sealing means 50 shaped according to what has been described above are extremely reliable and efficient although primer is not provided between the annular stiffening body 53 and the base body 51.

When the ball-type element 2 is in the flow control position, the pressure of the fluid upstream of the ball-type element 2 produces a thrust of the ball-type element 2 toward the sealing means 50 arranged at the open tubular delivery portion 13.

This thrust causes the outer surface of the ball-type element 2 to be compressed against the internal annular surface 52 of the sealing means 50 and ensures the seal between the sealing surface 54 and the respective annular shoulder 131a.

In particular, the base body 51 has a sealing surface 54 which has at least one external annular protrusion 54a.

Preferably, the sealing surface 54 has at least two mutually spaced external annular protrusions 54a.

Advantageously, the internal annular surface 52 is provided with an annular protrusion which is directed toward the hollow valve body 11 and has a curvilinear transverse cross-section.

According to the invention, the metallic annular stiffening body 53 comprises at least one first segment 53b which is arranged, during use, parallel to the axis of rotation 100 of the ball-type element 2 and at least one second portion 53a which is arranged, during use, at right angles to the axis of rotation 100 of the ball-type element 2.

Conveniently, the annular stiffening body 53 is made of metal.

Nothing forbids providing the annular stiffening body in various dimensions or shapes (for example L-shaped, T-shaped, U-shaped, H-shaped, etc.).

According to the invention, the cross-sectional profile of the annular stiffening body 53 is symmetrical with respect to a plane of symmetry 200 (for example it is T-shaped or H-shaped): this allows to arrange the annular stiffening body 53 inside the mold in any way.

The sealing means 50 are provided with a plurality of positioning holes 56 for the annular stiffening body 53, which connect the sealing surface 54 and the annular stiffening body 53.

Conveniently, radial centering abutments 55a are formed on the outer surface 55 of the sealing means 50 for locking in the gasket seat 121, 131 and for discharge, allowing the passage of fluid from the open tubular intake portion 12 toward the hollow valve body 11 through the passage or passages.

Conveniently, the ball-type element 2 is made of plastic material.

The particular mutual shape of the hollow valve body 11, of the respective ball-type element 2 and of the sealing means 50 ensures in any case a correct positioning and a precise movement of the ball-type element 2.

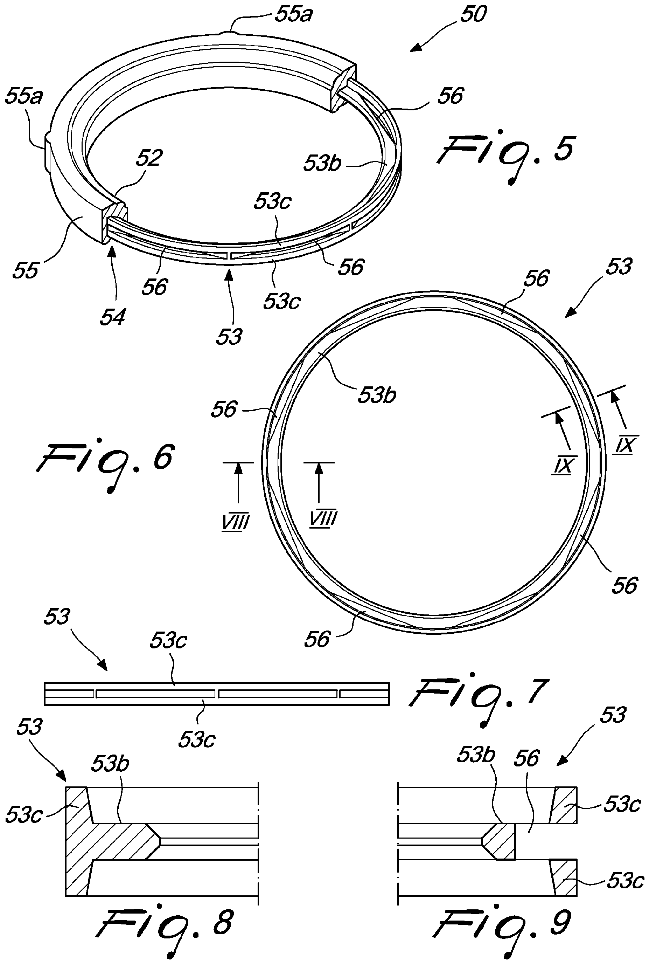

With reference to the embodiment shown in Figures 5 to 9, the annular stiffening body 53 is provided with at least one recess or hollow 56 for connection between portions of the base body 51 arranged on opposite sides with respect to the plane of arrangement of the first segment 53b.

Conveniently, the annular stiffening body 53 is provided with a plurality of recesses or hollows 56 which are mutually angularly spaced around the axis of the annular stiffening body 53.

As a consequence of co-molding, by virtue of the presence of the recesses or hollows 56, the plastic material of which the base body 51 is made penetrates through the recesses or hollows 56, allowing an extremely effective grip between the annular stiffening body 53 and the base body 51.

Preferably, the recesses or hollows 56 are extended at the first segment 53b, starting from the outer surface of the annular stiffening body 53.

According to a further aspect, the present invention relates to sealing means 50 for ball valves 1.

The sealing means 50 are designed in particular to be arranged between two open tubular portions (12, 13) of the ball valve and a ball-type element 2, which is accommodated within a hollow valve body 11 connected to an open tubular intake portion 12 and to an open tubular delivery portion 13 for connection to a respective duct portion.

The ball-type element 2 is provided with at least one flow passage 2a and is able to move rotationally between at least one flow intake position and a flow control position, by virtue of the action of a stem 3 which can be actuated in order to allow the rotation of the ball-type element 2 through a preset angle from the intake position toward the flow control position and vice versa.

The sealing means 50 comprise, respectively, in particular, a substantially cylindrical base body 51 made of plastic material which is co-molded around at least one annular stiffening body 53 which forms at least one angular positioning segment 53a.

The base body 51 has an internal annular surface 52 which is designed to face a portion of the outer surface of the ball-type element 2 and a sealing surface 54, which is arranged opposite with respect to the internal annular surface 52 and is designed to face a respective annular shoulder 121a, 131a of a respective gasket seat 121, 131.

The gasket seat 121, 131 has a longitudinal seat portion 122a, 132a which is arranged substantially at right angles to the angular shoulder 121a, 131a and is designed to face the outer surface 55 of the sealing means 50.

At least one restrained flow passage for the fluid is provided between the outer surface 55 of the sealing means 50 and the respective longitudinal seat portion 122a, 132a and is adapted to allow, with the ball-type element in the flow control position, the passage of fluid from the open tubular intake portion 12 toward the hollow valve body 11.

The use of a ball valve according to the present invention is evident from what has been described above.

The shape of the sealing means 50, and in particular the presence of the first annular stiffening body 53, and of the internal and external protrusions allows to reduce drastically the unseating effect due to the difference in pressure.

In fact, as explained, the external sealing surface 54 of the sealing means 50 is deformable, when the ball-type element 2 is in the flow control position, due to the difference in pressure between the open tubular intake portion 12 and the hollow valve body 11.

As a consequence of this deformability, a passage of fluid is created through the restricted flow passages from the open tubular intake portion 12 toward the hollow valve body 11, so as to provide, inside the hollow valve body 11, the same pressure that is present at the open tubular intake portion 12.

Furthermore, when the ball-type element 2 is in the flow control position, the pressure of the fluid upstream of the ball-type element 2 produces a thrust of the ball-type element 2 against the respective internal annular surface 52 of the sealing means 50 and the sealing surface 54 against the respective annular shoulder 131a so as to ensure the seal.

In addition to this, the fact of being able to provide the same pressure inside the hollow valve body 11 and in the open tubular intake portion 12 allows to subject the sealing means 50 arranged between the ball-type element 2 and the open tubular intake portion 12 to the same pressure both from the inside and from the outside, preventing the risk of swelling of the base body 51.

Furthermore, the possible presence of the annular protrusions allows to not compress the external surface of the sealing means 50 against the respective gasket seat. This allows to have significantly lower actuation torques.

Furthermore, the invention ensures a further optimization of the low actuation torque by virtue of the substantially circular profile of the region for providing a seal with the ball-type element (O-ring effect).

Finally, the proposed solution allows to obtain a base body made of plastic material or elastomer which has a substantially constant thickness both in a longitudinal direction and in a radial direction, and this ensures high elasticity and ease of operation without compromising the seal.

The invention thus conceived is susceptible of numerous modifications and variations, all of which are within the scope of the appended claims.

In practice it has been found that in all the embodiments the invention has achieved its intended aim and objects.

In practice, the dimensions may be any according to the requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A ball valve (1) for controlling the flow of fluids in ducts, comprising a hollow valve body (11) which forms in an upper region an access inlet (11a) and is provided with at least one open tubular intake portion (12) and at least one open tubular delivery portion (13) for connection to a respective duct portion, a hollow ball-type flow control element (2) accommodated in said hollow valve body (11), said ball-type element (2) being provided with at least one flow passage (2a) and being able to move rotationally between at least one flow intake position and a flow control position, a stem (3) which is integral or adapted to be rendered integral with said ball-type element (2) and can be actuated to allow the rotation of said ball-type element (2) through a preset angle from said intake position to said flow control position and vice versa, sealing means (50) being provided which are arranged between each one of said two open tubular portions (12, 13) and said ball-type element (2), wherein said sealing means (50) respectively comprise a substantially cylindrical base body (51) made of plastic material which is co-molded around at least one annular stiffening body (53) which forms at least one angular positioning segment (53a), said base body (51) having an internal annular surface (52) designed to face a portion of the outer surface of said ball-type element (2) and a sealing surface (54), which is arranged opposite with respect to said internal annular surface (52) and is designed to face a respective annular shoulder (121a, 131a) of a respective gasket seat (121, 131), said gasket seat (121, 131) being provided with a longitudinal seat portion (122a, 132a) which is arranged substantially at right angles to said annular shoulder (121a, 131a) and is designed to face an outer surface (55) of said sealing means (50)
wherein said at least one annular stiffening body (53) comprises at least one first segment (53b) which is arranged, during use, parallel to the rotation axis of said ball-type element (2) and at least one second segment (53a) which is arranged, during use, at right angles to the rotation axis of said ball-type element (2), **characterized in that** between the outer surface (55) of said sealing means (50) and the respective longitudinal seat portion (122a, 132a) there is provided at least one restrained flow passage for the fluid which is adapted to allow, with said ball-type element in the flow control position, the passage of fluid from said at least one open tubular intake portion (12) toward said hollow valve body (11), the cross-sectional profile of said annular stiffening body (53) being symmetrical with respect to a plane of symmetry (200).

2. The ball valve (1) according to claim 1, **characterized in that** said external sealing surface (54) is deformable, with said ball-type element (2) in the flow control position, due to the difference in pressure between said open tubular intake portion (12) and said hollow valve body (11) in order to determine the passage of fluid from said open tubular intake portion (12) toward said hollow valve body (11) through said at least one restrained flow passage.

3. The ball valve (1) according to one or more of the preceding claims, **characterized in that** said sealing surface (54) is provided with at least one external annular protrusion (54a).

4. The ball valve (1) according to one or more of the preceding claims, **characterized in that** said sealing surface (54) is provided with at least two mutually spaced external annular protrusions (54a).

5. The ball valve (1) according to one or more of the preceding claims, **characterized in that** said internal annular surface (52) is provided with an annular protrusion that is directed toward said valve body (11) and is provided with a curvilinear transverse cross-section.

6. The ball valve (1) according to one or more of the preceding claims, **characterized in that** said at least one annular stiffening body (53) is made of metal.

7. The ball valve (1) according to one or more of the preceding claims, **characterized in that** said base body (51) is made of polymeric material and/or of silicone material.

8. The ball valve (1) according to one or more of the preceding claims, **characterized in that** said sealing means (50) are provided with a plurality of holes (56) for positioning said annular stiffening body (53) which connect said sealing surface (54) and said annular stiffening body (53).

9. The ball valve (1) according to one or more of the preceding claims, **characterized in that** said annular stiffening body (53) is provided with at least one recess or hollow (56) for connection between portions of the base body (51) which are arranged on opposite sides with respect to the plane of arrangement of said first segment (53b).

10. The ball valve (1) according to one or more of the preceding claims, **characterized in that** said annular stiffening body (53) is provided with a plurality of recesses or hollows (56) which are mutually angularly spaced around the axis of said annular stiffening body (53).

## Patentansprüche

1. Ein Kugelventil (1) zum Steuern der Strömung von Fluiden in Leitungen, das einen hohlen Ventilkörper (11) umfasst, der in einem oberen Bereich einen Zugangseinlass (11a) bildet und mit mindestens einem offenen rohrförmigen Einlassabschnitt (12) und mindestens einem offenen rohrförmigen Auslassabschnitt (13) zur Verbindung mit einem dazugehörigen Leitunsabschnitt ausgestattet ist; ein hohles kugelförmiges Durchflussregelelement (2), das in dem hohlen Ventilkörper (11) untergebracht ist, wobei das kugelförmige Element (2) mit mindestens einem Strömungsdurchgang (2a) ausgestattet und in der Lage ist, sich drehend zwischen mindestens einer Strömungseinlassposition einer Strömungsregelposition zu bewegen; einen Schaft (3), der mit dem kugelförmigen Element (2) integral oder ausgebildet ist, um damit integral gemacht zu werden, und angetrieben werden kann, um die Drehung des kugelförmigen Elements (2) um einen vordefinierten Winkel aus der Einlassposition in die Durchflussregelposition und umgekehrt zu ermöglichen; wobei Abdichtmittel (50) bereitgestellt sind, die zwischen jedem der zwei offenen rohrförmigen Abschnitte (12, 13) und dem kugelförmigen Element (2) angeordnet sind; wobei die Abdichtmittel (50) jeweils einen im Wesentlichen zylindrischen Grundkörper (51) aus Kunststoffmaterial umfassen, der um mindestens einen ringförmigen Versteifungskörper (53) überformt ist, welcher mindestens ein Winkel-Positionierungssegment (53a) bildet; wobei der Grundkörper (51) eine innere ringförmige Oberfläche (52) hat, die konstruiert ist, um einem Abschnitt der äußeren Oberfläche des kugelförmigen Elements (2) zugewandt zu sein, und eine Abdichtungsoberfläche (54), die gegenüber der inneren ringförmigen Oberfläche (52) angeordnet und konstruiert ist, um einer entsprechenden ringförmigen Schulter (121a, 131a) eines entsprechenden Dichtungssitzes (121, 131) zugewandt zu sein, wobei der Dichtungssitz (121, 131) mit einem länglichen Sitzabschnitt (122a, 132a) ausgestattet ist, der im Wesentlichen in rechten Winkeln zu der ringförmigen Schulter (121a, 131a) angeordnet und konstruiert ist, um einer äußeren Oberfläche (55) der Abdichtmittel (50) zugewandt zu sein; wobei der mindestens eine ringförmige Versteifungskörper (53) mindestens ein erstes Segment (53b) umfasst, welches im Gebrauch parallel zur Rotationsachse des kugelförmigen Elements (2) angeordnet ist, und mindestens ein zweites Segment (53a), welches im Gebrauch in rechten Winkeln zur Rotationsachse des kugelförmigen Elements (2) angeordnet ist;
**dadurch gekennzeichnet, dass** zwischen der äußeren Oberfläche (55) der Abdichtmittel (50) und dem entsprechenden länglichen Sitzabschnitt (122a, 132a) mindestens ein Durchgang für eingeschränkten Durchfluss des Fluids bereitgestellt ist, der ausgebildet ist, um, wenn sich das kugelförmige Element in der Durchflussregelposition befindet, den Durchfluss von Fluid von dem mindestens einen offenen rohrförmigen Einlassabschnitt (12) zu dem hohlen Ventilkörper (11) zu gestatten;
wobei das Querschnittsprofil des ringförmigen Versteifungskörpers (53) mit Bezug auf eine Symmetrieebene (200) symmetrisch ist.

2. Das Kugelventil (1) gemäß Anspruch 1, **dadurch gekennzeichnet, dass** die äußere Abdichtungsoberfläche (54) aufgrund des Druckunterschieds zwischen dem offenen rohrförmigen Einlassabschnitt (12) und dem hohlen Ventilkörper (11) verformbar ist, wenn sich das kugelförmige Element (2) in der Durchflussregelposition befindet, um die Strömung des Fluids von dem offenen rohrförmigen Einlassabschnitt (12) zu dem hohlen Ventilkörper (11) durch den mindestens einen Durchgang für eingeschränkten Durchfluss zu bestimmen.

3. Das Kugelventil (1) gemäß einem oder mehreren der obigen Ansprüche, **dadurch gekennzeichnet, dass** die Abdichtungsoberfläche (54) mit mindestens einem äußeren ringförmigen Vorsprung (54a) versehen ist.

4. Das Kugelventil (1) gemäß einem oder mehreren der obigen Ansprüche, **dadurch gekennzeichnet, dass** die Abdichtungsoberfläche (54) mit mindestens zwei voneinander beabstandeten äußeren ringförmigen Vorsprüngen (54a) versehen ist.

5. Das Kugelventil (1) gemäß einem oder mehreren der obigen Ansprüche, **dadurch gekennzeichnet, dass** die innere ringförmige Oberfläche (52) mit einem ringförmigen Vorsprung versehen ist, der dem Ventilkörper (11) zugewandt und mit einem krummlinigen transversalen Querschnitt versehen ist.

6. Das Kugelventil (1) gemäß einem oder mehreren der obigen Ansprüche, **dadurch gekennzeichnet, dass** der mindestens eine ringförmige Versteifungskörper (53) aus Metall besteht.

7. Das Kugelventil (1) gemäß einem oder mehreren der obigen Ansprüche, **dadurch gekennzeichnet, dass** der Grundkörper (51) aus Polymermaterial und/oder Silikonmaterial besteht.

8. Das Kugelventil (1) gemäß einem oder mehreren der obigen Ansprüche, **dadurch gekennzeichnet, dass** die Abdichtmittel (50) mit einer Vielzahl von Löchern (56) zur Positionierung des ringförmigen Versteifungskörpers (53) versehen sind, welche die Abdichtungsoberfläche (54) und den ringförmigen Versteifungskörper (53) verbinden.

9. Das Kugelventil (1) gemäß einem oder mehreren der obigen Ansprüche, **dadurch gekennzeichnet, dass** der ringförmige Versteifungskörper (53) mit mindestens einer Vertiefung oder mindestens einem Hohlraum (56) zur Verbindung zwischen Teilen des Grundkörpers (51) ausgestattet ist, die mit Bezug auf die Ebene der Anordnung des ersten Segments (53b) auf gegenüberliegenden Seiten angeordnet sind.

10. Das Kugelventil (1) gemäß einem oder mehreren der obigen Ansprüche, **dadurch gekennzeichnet, dass** der ringförmige Versteifungskörper (53) mit einer Vielzahl von Vertiefungen oder Hohlräumen (56) ausgestattet ist, die um die Achse des ringförmigen Versteifungskörpers (53) winklig voneinander beabstandet sind.

## Revendications

1. Clapet à bille (1) destiné à commander l'écoulement de fluides dans des conduits, le clapet à bille comprenant un corps de clapet creux (11) qui forme, dans une zone supérieure (11a), une entrée d'accès et comprend au moins une partie d'admission tubulaire ouverte (12) et au moins une partie de distribution tubulaire ouverte (13) pour une connexion à une partie de conduit respective, un élément de commande d'écoulement de type à bille creux (2) logé dans ledit corps de valve creux (11), ledit élément de type à bille (2) étant pourvu d'au moins un passage d'écoulement (2a) et capable de se déplacer par rotation entre au moins une position d'admission d'écoulement et une position de commande d'écoulement, une tige (3) qui est solidaire ou appropriée à être rendue solidaire dudit élément de type bille (2) et peut être actionnée pour permettre la rotation dudit élément de type bille (2) selon un angle prédéterminé à partir de cette position d'admission vers ladite position de commande d'écoulement et vice versa, des moyens d'étanchéité (50) étant prévus qui sont disposés entre chacune des parties tubulaires ouvertes (12, 13) et ledit élément de type bille (2), lesdits moyens d'étanchéité (50) comprenant respectivement un corps de base sensiblement cylindrique (51) fait en un matériau plastique qui est co-moulé autour d'au moins un corps de renforcement annulaire (53) qui forme au moins un segment de positionnement angulaire (53a), ledit corps de base (51) ayant une surface interne annulaire (52) conçue pour faire face à une partie de la surface externe dudit élément de type bille (2) et une surface d'étanchéité (54) qui est disposée à l'opposé de ladite surface annulaire interne (52) et conçue pour faire face à une épaule annulaire (121a, 131a) d'un siège de valve respectif (121, 131), ledit siège de valve (121, 131) étant pourvu d'une partie de siège longitudinale (122a, 132a) qui est disposée sensiblement à des angles droits par rapport à ladite épaule annulaire (121a, 131a) et conçue pour faire face à une surface externe (55) desdits moyens d'étanchéité (50), ledit au moins un corps de renforcement annulaire (53) comprenant au moins un premier segment (53b) qui est, en cours d'utilisation, disposé de manière parallèle à l'axe de rotation dudit élément de type bille (2) et au moins un second segment (53a) qui est, en cours d'utilisation, disposé à des angles droits par rapport à l'axe de rotation dudit élément de type bille (2), **caractérisé en ce qu'**entre la surface externe (55) desdits moyens d'étanchéité (50) et la partie de siège longitudinale respective (122a, 132a) au moins un passage d'écoulement limité est prévu pour le fluide, passage qui est approprié à permettre, avec ledit élément de type bille en position de commande d'écoulement, l'écoulement de fluide à partir de ladite au moins une partie d'admission tubulaire ouverte (12) vers ledit corps de valve creux (11), le profil transversal dudit corps de renforcement annulaire (53) étant symétrique par rapport à un plan de symétrie (200).

2. Clapet à bille (1) suivant la revendication 1, **caractérisé en ce que** ladite surface d'étanchéité externe (54) est déformable, avec ledit élément de type bille (2) en position de commande d'écoulement, en raison de la différence de pression entre ladite partie d'admission tubulaire ouverte (12) et ledit corps de valve creux (11) de manière à déterminer l'écoulement de fluide à partir de ladite partie d'admission tubulaire ouverte (12) vers ledit corps de valve creux (11) à travers ledit au moins un passage d'écoulement limité.

3. Clapet à bille (1) suivant une ou plusieurs des revendications précédentes, **caractérisé en ce que** ladite surface d'étanchéité (54) est pourvue d'au moins une saillie annulaire externe (54a).

4. Clapet à bille (1) suivant une ou plusieurs des revendications précédentes, **caractérisé en ce que** ladite surface d'étanchéité (54) est pourvue d'au moins deux saillies annulaires externes (54a) espacées l'une de l'autre.

5. Clapet à bille (1) suivant une ou plusieurs des revendications précédentes, **caractérisé en ce que** ladite surface annulaire interne (52) est pourvue d'une saillie annulaire qui est dirigée vers ledit corps de valve (11) et présente une section transversale curviligne.

6. Clapet à bille (1) suivant une ou plusieurs des revendications précédentes, **caractérisé en ce que** ledit au moins un corps de renforcement annulaire (5) est fait de métal.

7. Clapet à bille (1) suivant une ou plusieurs des revendications précédentes, **caractérisé en ce que** ledit corps de base (51) est fait en un matériau polymère et/ou en un matériau silicone.

8. Clapet à bille (1) suivant une ou plusieurs des revendications précédentes, **caractérisé en ce que** lesdits moyens d'étanchéité (50) sont pourvus de plusieurs orifices (56) pour le positionnement dudit corps de renforcement annulaire (53), lesquels orifices connectent ladite surface d'étanchéité (54) et ledit corps de renforcement annulaire (53).

9. Clapet à bille (1) suivant une ou plusieurs des revendications précédentes, **caractérisé en ce que** ledit corps de renforcement annulaire (53) est pourvu d'au moins un évidement ou creux (56) pour la connexion entre des parties du corps de base (51) qui sont disposées sur des côtés opposés par rapport au plan d'agencement dudit premier segment (53b).

10. Clapet à bille (1) suivant une ou plusieurs des revendications précédentes, **caractérisé en ce que** ledit corps de renforcement annulaire (53) est pourvu d'une pluralité d'évidements ou de creux (56) qui sont espacés les uns des autres selon un angle autour de l'axe dudit corps de renforcement annulaire (53).
